Europäisches Patentamt

European Patent Office

Office européen des brevets

(19)

(11) **EP 1 240 759 B1**

(12) **FASCICULE DE BREVET EUROPEEN**

(45) Date de publication et mention
de la délivrance du brevet:
**31.03.2004 Bulletin 2004/14**

(51) Int Cl.⁷: **H04L 25/02**, H04L 1/06

(21) Numéro de dépôt: **00985335.9**

(86) Numéro de dépôt international:
**PCT/FR2000/003306**

(22) Date de dépôt: **27.11.2000**

(87) Numéro de publication internationale:
**WO 2001/041382 (07.06.2001 Gazette 2001/23)**

(54) **DISPOSITIFS D'ESTIMATION DE CANAL RADIO ET DE DEMODULATION**

VORRICHTUNGEN ZUR FUNKKANAL-UND DEMODULATIONSSCHÄTZUNG

DEVICE FOR ESTIMATING RADIO CHANNEL AND DEMODULATION

(84) Etats contractants désignés:
**AT BE CH CY DE DK ES FI FR GB GR IE IT LI LU
MC NL PT SE TR**

(30) Priorité: **01.12.1999 FR 9915149**

(43) Date de publication de la demande:
**18.09.2002 Bulletin 2002/38**

(73) Titulaire: **NORTEL NETWORKS SA**
**78280 Guyancourt (FR)**

(72) Inventeurs:
• **JARD, Alexandre**
**F-75015 Paris (FR)**

• **EL NAHAS EL HOMSI, Hassan**
**F-75015 Paris (FR)**
• **BEN RACHED, Nidham**
**F-75017 Paris (FR)**

(74) Mandataire: **Loisel, Bertrand**
**Cabinet Plasseraud**
**65/67 rue de la Victoire**
**75440 Paris Cedex 09 (FR)**

(56) Documents cités:
**EP-A- 0 669 729** **EP-A- 0 911 991**
**US-A- 5 905 721**

**Description**

La présente invention concerne les techniques d'estimation des canaux radio, ainsi qu'un démodulateur utilisant une telle technique.

L'invention trouve application dans le domaine des radiocommunications à accès multiple à répartition par codes (CDMA, « Code-Division Multiple Access »), notamment dans les cas où le temps d'un symbole d'information est sensiblement plus grand que la mémoire du canal (c'est-à-dire qu'on peut négliger l'interférence inter-symboles).

Dans un système CDMA, les symboles transmis, binaires ($\pm 1$) ou quaternaires ($\pm 1 \pm j$), sont multipliés par des codes d'étalement composés d'échantillons, appelés « chips », dont la cadence est supérieure à celle des symboles. Des codes d'étalement orthogonaux ou quasi-orthogonaux sont alloués à différents canaux logiques partageant la même fréquence porteuse, afin de permettre à chaque récepteur de détecter la séquence de symboles qui lui est destinée, en multipliant le signal reçu par le code d'étalement correspondant.

Un avantage du système CDMA est qu'il permet d'exploiter des trajets multiples de propagation radio, en utilisant ce qu'on appelle un récepteur en râteau (« rake receiver »).

Le récepteur en râteau effectue une démodulation cohérente fondée sur une approximation de la réponse impulsionnelle du canal de propagation radio par une série de pics, chaque pic apparaissant avec un retard correspondant au temps de propagation le long d'un trajet particulier et ayant une amplitude complexe correspondant à l'atténuation et au déphasage du signal le long de ce trajet (réalisation instantanée du fading). En analysant plusieurs trajets de réception, c'est-à-dire en échantillonnant plusieurs fois la sortie d'un filtre adapté au code d'étalement du canal, avec des retards correspondant respectivement à ces trajets, le récepteur en râteau obtient des estimations multiples des symboles transmis, qui sont combinées pour obtenir un gain en diversité. La combinaison peut notamment être effectuée selon la méthode dite MRC (« Maximum Ratio Combining »), qui pondère les différentes estimations en fonction des amplitudes complexes observées pour les différents trajets.

Afin de permettre cette démodulation cohérente, un canal pilote peut être prévu pour l'estimation de la réponse impulsionnelle sous forme d'une succession de pics. La réponse impulsionnelle est estimée au moyen d'un filtre adapté à un code d'étalement pilote avec lequel l'émetteur module une séquence de symboles connus, par exemple des symboles à 1. Les positions des maxima de la sortie de ce filtre adapté donnent les retards utilisés dans les doigts du récepteur en râteau, et les amplitudes complexes associées correspondent aux valeurs de ces maxima. Lorsque plusieurs trajets distincts ont des retards très proches, par exemple avec des écarts inférieurs à la durée d'un chip, la recherche des maxima conduit généralement à ne prendre en compte qu'un seul de ces retards.

Des techniques de démodulation aveugle utilisées dans certains récepteurs CDMA sont décrit dans US-A-5 905 721. EP-A-0 669 729 décrit un système à accès multiples à répartition dans le temps.

Un but de la présente invention est d'exploiter une représentation du canal de propagation radio qui soit moins approximative que dans un récepteur en râteau traditionnel, notamment dans le cas où il existe plusieurs trajets de propagation ayant des retards proches.

Selon l'invention, il est proposé un dispositif d'estimation de paramètres représentant un canal de propagation radio, comprenant un filtre adapté pour produire des observations d'un vecteur de référence de W échantillons successifs d'un signal formé par filtrage adapté d'un signal reçu selon le canal de propagation avec un code d'étalement pilote, et des moyens d'estimation de paramètres représentant le canal de propagation, incluant des vecteurs propres d'une matrice d'autocorrélation du vecteur de référence. Les paramètres représentant le canal de propagation peuvent en outre comprendre des valeurs propres de la matrice d'autocorrélation du vecteur de référence, respectivement associées auxdits vecteurs propres avec lesquels elles sont estimées.

Le dispositif emploie une description du canal de propagation sous forme de ses éléments propres, ce qui procure une estimation plus riche que le modèle de la ligne à retard (retards et amplitudes) pris en compte dans le récepteur en râteau traditionnel. Ainsi, chaque trajet de propagation peut être pris en compte dans la réponse du canal au moyen d'une forme d'onde correspondant à un vecteur propre de la matrice d'autocorrélation et non simplement par un pic ponctuel associé à un retard.

Dans un mode de réalisation préféré, l'estimation des vecteurs propres de la matrice d'autocorrélation comprend les étapes suivantes :

- extraire du vecteur de référence M sous-vecteurs de référence composés chacun de S échantillons successifs dudit signal formé par filtrage adapté, M et S étant des nombres plus grands que 1, les M sous-vecteurs de référence correspondant en moyenne à M plages énergétiques du vecteur de référence ;
- estimer les matrices d'autocorrélation respectives des M sous-vecteurs de référence ;
- déterminer des sous-vecteurs propres associés chacun à une valeur propre et à l'un des M sous-vecteurs de référence, chaque sous-vecteur propre étant, pour la valeur propre associée, un vecteur propre de la matrice d'autocorrélation estimée du sous-vecteur de référence associé ;
- former chaque vecteur propre estimé de la matrice d'autocorrélation du vecteur de référence en plaçant un des sous-vecteurs propres aux positions des S échantillons du sous-vecteur de référence associé et des échantillons nuls aux W-S autres positions.

Ceci permet de réaliser un compromis entre la finesse d'estimation du canal et la complexité des calculs requis, qui sont toutes deux des fonctions croissantes de S, ainsi que de M. Plus la capacité de calcul disponible est grande, plus les sous-vecteurs peuvent être de taille importante, ce qui affine l'approximation de la réponse du canal.

Le dispositif ci-dessus peut être utilisé chaque fois qu'on a besoin de caractériser un canal de propagation, en particulier pour effectuer une démodulation.

Un autre aspect de la présente invention se rapporte ainsi à un démodulateur pour une réception selon un canal de propagation radio sur lequel sont définis plusieurs canaux logiques multiplexés incluant un canal pilote et au moins un canal de données, comprenant des moyens d'obtention de plusieurs observations d'un premier vecteur de W échantillons successifs d'un premier signal formé par filtrage adapté d'un signal reçu selon le canal de propagation au moyen d'un premier code d'étalement relatif au canal pilote, des moyens d'obtention d'un second vecteur de W échantillons successifs d'un second signal formé par filtrage adapté dudit signal reçu au moyen d'un second code d'étalement relatif au canal de données, des moyens d'estimation de paramètres représentant le canal de propagation, incluant des vecteurs propres d'une matrice d'autocorrélation du premier vecteur, et des moyens d'estimation de symboles pour estimer au moins un symbole d'information porté par le second signal sur la base des premier et second vecteurs et desdits paramètres représentant le canal de propagation. Ce démodulateur incorpore un dispositif d'estimation de canal tel qu'énoncé précédemment.

Si le second signal porte des symboles d'information binaires modulés selon une modulation binaire à déplacement de phase, les moyens d'estimation de symboles peuvent être agencés pour estimer au moins un symbole d'information binaire porté par le second signal par le signe de la partie réelle du nombre complexe :

$$\gamma = \sum_{k=0}^{d-1} \frac{(\lambda_k - N_0)/\|\underline{v}_k\|^2}{(1+\beta)\lambda_k - \beta.N_0} \left( \underline{r}^H \underline{v}_k \right)\left( \underline{v}_k^H \underline{x} \right) \tag{1}$$

où d est le nombre de vecteurs propres estimés de la matrice d'autocorrélation du premier vecteur, $\underline{v}_k$ est un vecteur propre de la matrice d'autocorrélation du premier vecteur, associé à une valeur propre $\lambda_k$, $N_0$ est une estimation de la puissance du bruit sur le canal de propagation, $\underline{r}$ et $\underline{x}$ sont respectivement les premier et second vecteurs, $\beta$ est un coefficient prédéterminé, $(.)^H$ désigne le transposé conjugué, et $\|.\|$ la norme d'un vecteur.

Une vraisemblance dudit symbole d'information binaire estimé peut être déterminée proportionnellement à la valeur absolue de la partie réelle du nombre complexe $\gamma$.

Si le second signal porte des symboles d'information quaternaires modulés selon une modulation quaternaire à déplacement de phase, les moyens d'estimation de symboles peuvent être agencés pour estimer au moins un symbole d'information quaternaire porté par le second signal par deux bits respectivement définis par les signes des parties réelle et imaginaire du nombre complexe $\gamma$ défini par la relation (1). Des vraisemblances respectives de ces deux bits peuvent en outre être déterminées proportionnellement aux valeurs absolues des parties réelles et imaginaires du nombre complexe $\gamma$.

Le démodulateur peut également être adapté pour traiter un signal reçu selon le canal de propagation sous forme de plusieurs signaux captés au moyen d'antennes différentes, afin de procurer une diversité spatiale.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de récepteur de radiocommunication comportant un démodulateur selon l'invention ;
- la figure 2 est un schéma d'un module d'estimation de canal du démodulateur de la figure 1 ;
- la figure 3 est un schéma synoptique d'un module d'estimation de symboles du démodulateur de la figure 1 ; et
- la figure 4 est un schéma synoptique d'une unité de calcul du module de la figure 3.

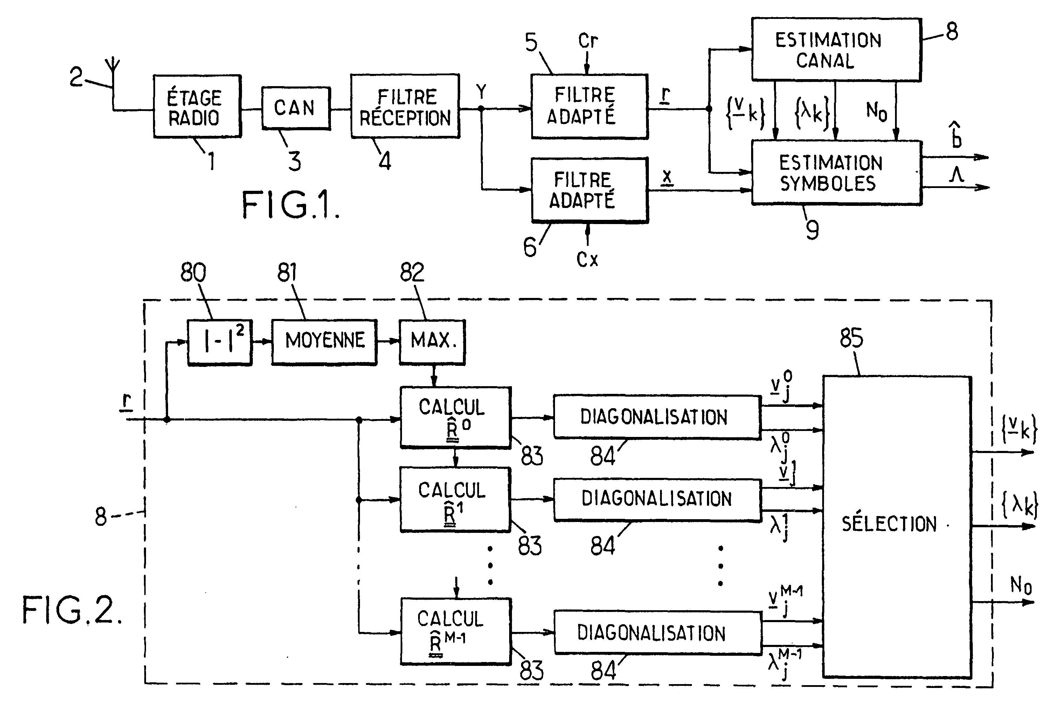

Le récepteur représenté sur la figure 1 comporte un étage radio 1 qui reçoit le signal radio capté par l'antenne 2 et le convertit en bande de base. Le signal en bande de base est numérisé par un convertisseur analogique-numérique 3, puis fourni à un filtre de réception 4. Le filtre 4 assure un filtrage adapté à la mise en forme des signaux par l'émetteur. Il délivre un signal numérique Y à raison d'un échantillon complexe par chip des codes d'étalement.

En présence de trajets multiples de propagation (au nombre de d), la réponse h(t) du canal allant jusqu'au filtre de réception 4 peut s'écrire :

$$h(t) = \sum_{k=0}^{d-1} s_k \cdot a(t - \tau_k) \qquad (2)$$

Les $\tau_k$ représentent les différents retards des échos, les $s_k$ sont les réalisations instantanées du fading variant au cours du temps, et a(t) désigne l'impulsion formant la modulation. On suppose que le critère de Shannon est respecté lorsque les signaux sont échantillonnés à la fréquence chip 1/T, et que la réponse du canal est nulle pour t > (W-1)T. Dans ce cas, la réponse du canal peut être représentée par un vecteur à W composantes complexes :

$$\underline{h} = \begin{bmatrix} h(0) \\ h(T) \\ \vdots \\ h((W-1)T) \end{bmatrix} = \sum_{k=0}^{d-1} \alpha_k \cdot \underline{v}_k \qquad (3)$$

Dans la relation (3), les $\underline{v}_k$ sont les vecteurs propres de la matrice d'autocorrélation de h (soit $\underline{R} \cdot \underline{v}_k = \mu_k \cdot \underline{v}_k$ avec $\underline{R} = E(\underline{h}.\underline{h}^H)$, où E(.) désigne l'espérance mathématique), et les $\alpha_k$ sont des réalisations instantanées de variables aléatoires gaussiennes complexes de variances égales aux valeurs propres $\mu_k$ de la matrice d'autocorrélation

$$\left( E\left( |\alpha_k|^2 \right) = \mu_k \right).$$

Cette décomposition de la matrice $\underline{R}$ donne des vecteurs propres orthogonaux ($\underline{v}_k^H.\underline{v}_{k'} = 0$ si $k \neq k'$) et des valeurs propres $\mu_k$ réelles positives ou nulles puisque la matrice est hermitienne.

Parmi les canaux logiques multiplexés sur le canal radio, on a un canal de contrôle sur lequel sont transmis des symboles pilotes et un ou plusieurs canaux de données sur lequel sont transmis des symboles d'information. On suppose que la puissance d'émission sur le canal de contrôle est β fois supérieure à la puissance d'émission d'un symbole d'information b sur un canal de données (cette dernière puissance sera considérée comme unitaire). Le coefficient β est connu à l'avance. Le signal est affecté d'un bruit blanc additif centré gaussien de variance $N_0$.

Un filtre adapté 5 filtre le signal reçu Y conformément au code d'étalement Cr du canal pilote. Il en résulte pour chaque symbole pilote un vecteur $\underline{r}$ ayant W composantes complexes, donné par :

$$\underline{r} = \sqrt{\beta} \sum_{k=0}^{d-1} \alpha_k \cdot \underline{v}_k + \underline{n} \qquad (4)$$

avec

$$E\left( \underline{n}.\underline{n}^H \right) = N_0 . \underline{I},$$

la matrice identité étant notée I.

Un autre filtre adapté 6 filtre le signal reçu Y conformément au code d'étalement Cx du canal de données. Il en résulte pour chaque symbole inconnu b un vecteur $\underline{x}$ ayant W composantes complexes, donné par :

$$\underline{x} = b . \sum_{k=0}^{d-1} \alpha_k \cdot \underline{v}_k + \underline{n}' \qquad (5)$$

avec

$$E\!\left(\underline{n}'\underline{n}'^{H}\right) = N_0.\underline{\underline{I}} \quad \text{et} \quad E\!\left(\underline{n}\,\underline{n}'^{H}\right) = \underline{\underline{0}}\,.$$

On note

$$\underline{X} = \begin{bmatrix} \underline{r} \\ \underline{x} \end{bmatrix}$$

le vecteur gaussien de taille 2W constitué par la concaténation des signaux reçus sur les deux canaux. Sa densité de probabilité p($\underline{X}$) peut s'écrire :

$$p(\underline{X}) = \frac{1}{\pi^{2W}.\det(\underline{\underline{K}})} . \exp\!\left(-\underline{X}^{H}\underline{\underline{K}}^{-1}\underline{X}\right) \tag{6}$$

où

$$\underline{\underline{K}} = E\!\left(\underline{X}^{H}\underline{X}\right),$$

et det(.) désigne le déterminant.

Le but du démodulateur est de maximiser par rapport à b la fonction de vraisemblance donnée par la probabilité conditionnelle p(b|$\underline{X}$).

Comme les réalisations du bruit et du fading sont indépendantes, on a :

$$\underline{\underline{K}} = \begin{bmatrix} \beta.\underline{\underline{R}} & b^{*}\sqrt{\beta}.\underline{\underline{R}} \\ b\sqrt{\beta}.\underline{\underline{R}} & \underline{\underline{R}} \end{bmatrix} + N_0\,\underline{\underline{I}} = \underline{\underline{B}}.\left[\sum_{k=0}^{d-1}\left(2\mu_k.\underline{w}_k.\underline{w}_k^{H}\right)\right]\underline{\underline{B}}^{H} + N_0\,\underline{\underline{I}} \tag{7}$$

en utilisant la décomposition en éléments propres de la matrice $\underline{\underline{R}}$, avec

$$\underline{\underline{B}} = \begin{bmatrix} \sqrt{\beta}.\underline{\underline{I}} & \underline{\underline{0}} \\ \underline{\underline{0}} & b.\underline{\underline{I}} \end{bmatrix} \quad \text{et} \quad \underline{w}_k = \frac{1}{\sqrt{2}.\|\underline{v}_k\|}.\begin{bmatrix} \underline{v}_k \\ \underline{v}_k \end{bmatrix}.$$

Par application du lemme d'inversion matricielle, on obtient :

$$\underline{\underline{K}}^{-1} = \frac{1}{N_0}.\left[\underline{\underline{I}} - \sum_{k=0}^{d-1}\frac{2\mu_k}{N_0 + 2\mu_k.\|\underline{\underline{B}}\underline{w}_k\|^2}\left(\underline{\underline{B}}\underline{w}_k\right)\left(\underline{\underline{B}}\underline{w}_k\right)^{H}\right] \tag{8}$$

En prenant le logarithme de la probabilité (6), et en notant que le déterminant det($\underline{K}$) est commun à tous les symboles possibles et que $\|\underline{B}\underline{w}_k\|^2 = (1+\beta)/2$, le démodulateur doit minimiser la fonction suivante par rapport à b :

$$\phi(b) = \sum_{k=0}^{d-1} \frac{2\mu_k}{N_0 + (1+\beta)\mu_k} \left| \underline{X}^H \underline{\underline{B}}\underline{w}_k \right|^2$$

$$= \sum_{k=0}^{d-1} \frac{\mu_k/\|\underline{v}_k\|^2}{N_0 + (1+\beta)\mu_k} \left| \underline{v}_k^H \cdot \left( \sqrt{\beta} \cdot \underline{r} + b \cdot \underline{x} \right) \right|^2 \qquad (9)$$

Lorsque les symboles sont des bits modulés selon une modulation binaire à déplacement de phase (BPSK, « binary phase shift keying »), l'estimation b d'un symbole b, qui minimise la fonction $\phi(b)$, est alors donnée par le signe de la partie réelle du nombre complexe :

$$\gamma = \sum_{k=0}^{d-1} \frac{\mu_k/\|\underline{v}_k\|^2}{N_0 + (1+\beta)\cdot\mu_k} \cdot \left( \underline{r}^H \underline{v}_k \right)\left( \underline{v}_k^H \underline{x} \right) \qquad (10)$$

($\hat{b}$ = sgn[Re($\gamma$)]), et la vraisemblance maximisée est proportionnelle à la valeur absolue de Re($\gamma$). Si un décodage à entrées souples (« soft input decoding ») est effectué en aval du démodulateur, la vraisemblance du bit estimé b peut donc être mesurée par $\Lambda = |\text{Re}(\gamma)|$.

Lorsque les symboles sont quaternaires et modulés selon une modulation quaternaire à déplacement de phase (QPSK, « quaternary phase shift keying »), l'estimation d'un symbole b = $b_1$ + j.$b_2$, qui minimise la fonction $\phi$ (b), est formée par deux bits donnés par les signes respectifs des parties réelle et imaginaire du nombre complexe $\gamma$ défini par la relation (10) ($\hat{b}$ = $b_1$ + j.$b_2$ = sgn[Re($\gamma$)] + j. sgn[Im($\gamma$)]), et les vraisemblances de ces deux bits sont respectivement proportionnelles aux valeurs absolues des parties réelle et imaginaire de $\gamma$. Si un décodage à entrées souples est effectué en aval du démodulateur, les vraisemblances des deux bits estimés $b_1$,$b_2$ peuvent donc être mesurées par $\Lambda_1 = |\text{Re}(\gamma)|$ et $\Lambda_2 = |\text{Im}(\gamma)|$.

Lorsque le récepteur comporte deux antennes en entrée de deux voies de traitement, chaque voie ayant deux filtres adaptés l'un au code Cr du canal pilote fournissant un vecteur $\underline{r}_n$, $\underline{r}_d$, et l'autre au code Cx du canal de données fournissant un vecteur $\underline{x}_n$, $\underline{x}_d$, la fonction à minimiser $\phi(b)$ peut tenir compte de la diversité spatiale, son expression n'étant plus donnée par (9) mais par :

$$\phi(b) = \sum_{k=0}^{d-1}\left( \frac{\mu_k^+/\|\underline{v}_k\|^2}{N_0 + (1+\beta)\mu_k^+} \left| \underline{v}_k^{+H}\cdot(\sqrt{\beta}\underline{r}' + b\underline{x}') \right|^2 + \frac{\mu_k^-/\|\underline{v}_k\|^2}{N_0 + (1+\beta)\mu_k^-} \left| \underline{v}_k^{-H}\cdot(\sqrt{\beta}\underline{r}' + b\underline{x}') \right|^2 \right)$$

$$(11)$$

avec les notations :

$$\underline{r}' = \begin{pmatrix} \underline{r}_n \\ \underline{r}_d \end{pmatrix}, \quad \underline{x}' = \begin{pmatrix} \underline{x}_n \\ \underline{x}_d \end{pmatrix}, \quad \underline{\underline{R}}' = \begin{bmatrix} \underline{\underline{K}} & \rho^*\underline{\underline{K}} \\ \rho\underline{\underline{K}} & \underline{\underline{K}} \end{bmatrix},$$

$\rho$ étant le facteur de corrélation entre les deux antennes (soit

$$E\left( \alpha_{k,n}^* \cdot \alpha_{k,d} \right) = \rho\cdot\mu_k \text{ ),}$$

les vecteurs $\underline{v}_k^+$ et $\underline{v}_k^-$ étant les vecteurs propres de $\underline{R}'$ respectivement associés aux valeurs propres $\mu_k^+$ et $\mu_k^-$, soit

$$\underline{v}_k^+ = \frac{1}{\sqrt{2}} \begin{pmatrix} \underline{v}_k \\ \rho.\underline{v}_k \, /|\rho| \end{pmatrix}, \quad \underline{v}_k^- = \frac{1}{\sqrt{2}} \begin{pmatrix} \underline{v}_k \\ -\rho.\underline{v}_k \, /|\rho| \end{pmatrix},$$

$\mu_k^+ = (1 + |\rho|)\mu_k$ et $\mu_k^- = (1-|\rho|)\mu_k$ pour $0 \le k < d$.

Dans le cas de réponses impulsionnelles de petite dimension W, il est aisé d'extraire les vecteurs propres de $\underline{R}$ par une méthode algébrique classique travaillant directement sur une estimation de la matrice, par exemple la méthode dite « Power Iteration » (voir Golub & Loane : « Matrix Computation », éditions Baltimore M.B.).

Dans le cas de réponses impulsionnelles de plus grande dimension W, la complexité requise pour mettre à jour l'estimation de $\underline{R}$ rend cette méthode irréalisable en pratique. On utilise alors une matrice $\underline{R} = E(\underline{r}.\underline{r}^H)$ définie comme l'autocorrélation du vecteur $\underline{r}$, liée à $\underline{R}$ par la relation :

$$\hat{\underline{R}} = \beta.\underline{R}+N_0.\underline{I} \tag{12}$$

On vérifie immédiatement que $\hat{\underline{R}}$ et $\underline{R}$ ont les mêmes vecteurs propres $\underline{v}_k$. Les valeurs propres $\lambda_k$ de $\hat{\underline{R}}$ sont de celles de $\underline{R}$ multipliées par $\beta$ et décalées de $N_0$, soit $\lambda_k = \beta.\mu_k + N_0$. Avec (10), on en déduit l'expression (1) du nombre complexe $\gamma$ servant à estimer les bits d'information.

En général, la matrice $\underline{R}$ a une structure creuse et possède peu d'éléments significatifs. Elle peut être décomposée selon l'approximation suivante :

$$\underline{R} = \begin{bmatrix} \underline{0} & \underline{0} & \cdots & & & \underline{0} \\ \underline{0} & \underline{R}^0 & \ddots & & & \\ & & \underline{0} & \ddots & & \vdots \\ \vdots & & \ddots & \ddots & \ddots & \\ & & & \ddots & \underline{R}^{M-1} & \underline{0} \\ \underline{0} & & \cdots & & \underline{0} & \underline{0} \end{bmatrix} \tag{13}$$

c'est-à-dire sous forme de blocs de taille SxS, notés $\underline{R}^i$ pour $0 \le i < M$, distribués le long de sa diagonale principale ($1 < S \ll W$). Les positions de ces M blocs le long de la diagonale de $\underline{R}$ correspondent aux zones les plus énergétiques de la réponse impulsionnelle du canal. De même, la matrice $\hat{\underline{R}}$ peut être approchée par :

$$\hat{\underline{R}} = \begin{bmatrix} N_0.\underline{I} & \underline{0} & \cdots & & & \underline{0} \\ \underline{0} & \hat{\underline{R}}^0 & \ddots & & & \\ & & N_0.\underline{I} & \ddots & & \vdots \\ \vdots & & \ddots & \ddots & \ddots & \\ & & & \ddots & \hat{\underline{R}}^{M-1} & \underline{0} \\ \underline{0} & & \cdots & & \underline{0} & N_0.\underline{I} \end{bmatrix} \tag{14}$$

en notant $\hat{\underline{R}}^i = \underline{R}^i + N_0.\underline{I}$ l'observée bruitée de $\underline{R}^i$ pour $0 \le i < M$.

Chaque sous-matrice $\underline{R}^i$ admet une décomposition en vecteurs propres, identique à celle de $\hat{\underline{R}}^i$, qui peut être obtenue rapidement par une méthode classique puisque sa dimension S est petite devant celle de $\underline{R}$. En notant $d^i$ la

dimension du sous-espace signal relativement à la sous-matrice $\hat{\underline{R}}^i$, avec

$$\sum_{i=0}^{M-1} d^i = d, \, ($$

cette décomposition de $\hat{\underline{R}}^i$ s'écrit :

$$\hat{\underline{\underline{R}}}_i = \sum_{j=0}^{d^i-1} \lambda_j^i \cdot \left( \underline{v}_j^i \cdot \underline{v}_j^{i H} \right) \hspace{3cm} (15)$$

De même que précédemment, les valeurs propres sont décalées de la puissance du bruit. Ainsi les vecteurs propres $\underline{v}_k$ de $\underline{R}$ sont :

$$\underline{v}_k = \begin{bmatrix} 0 \\ \vdots \\ 0 \\ \underline{v}_j^i \\ 0 \\ \vdots \\ 0 \end{bmatrix} \text{ avec } \begin{cases} 0 \leq k \leq d-1 \\ 0 \leq i < M, \quad 0 \leq j < d^i \end{cases} \hspace{2cm} (16)$$

et ses valeurs propres $\mu_k$ sont celles des M matrices $\hat{\underline{R}}^i$, décalées de $N_0$ :

$$\mu_k = \frac{(\lambda_k - N_0)}{\beta} = \frac{(\lambda_j^i - N_0)}{\beta} \text{ avec } \begin{cases} 0 \leq k \leq d-1 \\ 0 \leq i < M, \quad 0 \leq j < d^i \end{cases} \hspace{2cm} (17)$$

Les sous-matrices $\hat{\underline{R}}^i$ sont localisées là où la réponse impulsionnelle concentre ses maxima d'énergie. Pour avoir la position des M sous-matrices, supposées de taille fixe S×S, il suffit donc d'avoir une estimation du profil en puissance du canal et d'en extraire les M portions de taille S les plus énergétiques. Ce profil peut être simplement calculé à partir de la moyenne du module carré de chaque échantillon du vecteur $\underline{r}$. Pour calculer les sous-matrices d'autocorrélation $\underline{R}^i$, on détermine les M sous-vecteurs $\underline{r}^i$ de dimension S correspondant aux signaux reçus sur le canal pilote aux positions précédemment déterminées, et on calcule après un certain nombre d'observations des moyennes des sous-matrices $\underline{r}^i \cdot \underline{r}^{iH}$.

Il se peut que certaines valeurs propres estimées ne soient pas significatives ou que l'on choisisse de ne retenir qu'un certain nombre fixe d'éléments propres. On peut donc, en fin de traitement, effectuer une sélection des vecteurs propres associés aux plus puissantes valeurs propres.

Le démodulateur de la figure 1 comprend un module d'estimation de canal 8, représenté de façon plus détaillé sur la figure 2, qui calcule des estimations des vecteurs propres $\underline{v}_k$ et des valeurs propres $\lambda_k$ de la matrice d'autocorrélation $\underline{R}$ du vecteur $\underline{r}$ délivré par le filtre adapté 5, ainsi qu'une estimation de la puissance du bruit $N_0$.

En référence à la figure 2, le module 8 comprend une unité 80 qui calcule des vecteurs de W composantes constituées par les modules carrés des composantes des observations successives du vecteur r délivré par le filtre adapté 5. Une unité 81 calcule une moyenne courante du vecteur délivré par l'unité 80, par exemple sur une fenêtre rectangulaire ou exponentielle. L'unité 82 détermine les M plages de S échantillons les plus énergétiques du vecteur moyenne, afin de définir les positions des sous-vecteurs $\underline{r}^i$ de taille S ($0 \leq i < M$) au sein des vecteurs $\underline{r}$.

Une unité 83 extrait les M sous-vecteurs $\underline{r}^i$ de chaque vecteur $\underline{r}$, et en estime la matrice d'autocorrélation par un calcul de moyennes des produits terme à terme :

$$\underline{\underline{\hat{R}}}^i = E\left( \underline{r}^i . \underline{r}^{iH} \right) \qquad (19)$$

Des unités de diagonalisation 84 extraient les valeurs propres $\lambda_j^i$ des matrices $R^i$, du moins celles de plus grands modules, et les vecteurs propres associés $\underline{v}_j^i$. Ce calcul peut être effectué selon toute méthode algébrique connue, par exemple « Power Iteration », qui ne pose pas de problème de mise en oeuvre compte tenu de la réduction opérée sur les dimensions des matrices à diagonaliser (S×S au lieu de W×W). L'unité 85 sélectionne les d valeurs propres de plus grands modules $\lambda_k$ parmi les valeurs propres $\lambda_j^i$ fournies par les unités 84, et les vecteurs propres correspondants $\underline{v}_k$ qu'elle construit à partir des $\underline{v}_j^i$ conformément à la relation (16).

L'unité 85 peut également déterminer la puissance du bruit $N_0$, par exemple prise égale à la plus petite des valeurs propres $\lambda_j^i$. D'autres méthodes classiques d'estimation de $N_0$ peuvent être utilisées.

Revenant à la figure 1, les paramètres $\underline{v}_k$, $\lambda_k$ ($0 \leq i < d$) et $N_0$ estimés par le module 8 sont fournis au module 9 qui estime les symboles transmis à partir des vecteurs $\underline{r}$ et $\underline{x}$ délivrés par les filtres adaptés 5, 6.

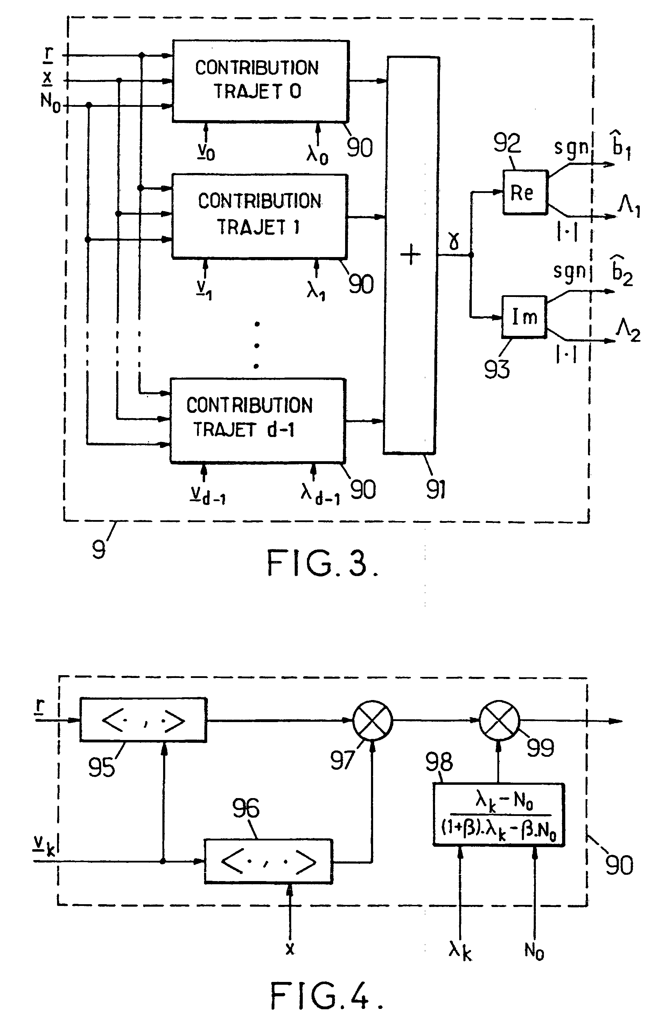

La figure 3 illustre une structure possible du module 9 dans le cas d'une modulation QPSK. Un additionneur 91 calcule la quantité $\gamma$ selon la relation (1) à partir des d contributions à sommer, calculées par des unités respectives 90.

Une telle unité 90, relative à un trajet k ($0 \leq k < d$), est illustrée par la figure 4. Les produits scalaires ($\underline{r}^H.\underline{v}_k$) et ($\underline{v}_k^H.\underline{x}$) sont respectivement calculés en 95 et 96, puis multipliés entre eux par le multiplieur complexe 97. Le bloc 98 effectue le calcul du coefficient $\frac{\lambda_k - N_0}{(|z|^2 \lambda_k) - \beta N_0}$ (on suppose ici que les unités 84 ont délivré les vecteurs propres sous forme orthonormée, soit $\|\underline{v}_j^i\|^2 = \|\underline{v}_k\|^2 = 1$), qu'un multiplieur complexe 99 multiplie par la sortie du multiplieur 97 pour adresser la contribution du trajet k à l'additionneur 91.

En sortie de l'additionneur 91, les unités 92,93 extraient respectivement les parties réelle et imaginaire de $\gamma$, dont les signes $b_1$, $b_2$ estiment les bits constituant le symbole quaternaire, et dont les valeurs absolues fournissent éventuellement des mesures de vraisemblance $\Lambda_1$, $\Lambda_2$.

Dans le cas d'une modulation BPSK, le module d'estimation de symboles 9 peut avoir la même structure que sur la figure 3, sauf que l'unité 93 n'est pas nécessaire.

Dans les dessins annexés, le démodulateur est représenté sous forme synoptique afin de mettre en évidence les différentes étapes de calcul. En pratique, ce calcul peut être effectué par un processeur de signal numérique programmé en conséquence, ainsi qu'il est usuel dans les démodulateurs numériques.

Les inventeurs ont testé les performances du démodulateur ci-dessus dans le cas du système CDMA retenu pour les réseaux cellulaires de troisième génération (voir « UMTS : la génération des mobiles multimédia », P. Blanc et al., L'Echo des Recherches, No. 170, 4e trimestre 1997 & 1er trimestre 1998, pages 53-68), dans le cas de codes d'étalement de cadence 3,84 Mchip/s avec une cadence de symboles de 15 kbit/s (facteur d'étalement SF = 256). Dans le système considéré, le canal de données est constitué par la partie réelle (voie I) d'un signal complexe modulé en QPSK, transmis par un terminal mobile vers une station de base. Le canal pilote correspondant fait partie d'un canal de contrôle constitué par la partie imaginaire (voie Q) du signal complexe modulé en QPSK. Le signal est traité par blocs de 666 µs, à raison de 2560 chips par bloc, ce qui représente 10 bits sur chaque voie avec SF = 256, à savoir 10 bits d'information sur la voie I, et 6 bits pilotes et 4 bits de commande sur la voie Q. Bien que la modulation radio soit QPSK, les symboles binaires transmis sur chaque voie I, Q doivent être considérés comme faisant l'objet d'une modulation effective de type BPSK. Dans ces simulations, la longueur de la réponse du canal était d'environ 15 µs (W = 56). Pour chaque bit estimé sur la voie I à partir d'un signal issu d'une seule antenne, le vecteur r utilisé dans la relation (1) était celui résultant de la moyenne des 6 bits pilotes du bloc courant, soit $\beta = 6$. Le canal était estimé au moyen de d = 4 vecteurs propres déterminés au moyen de M = 3 sous-matrices de dimension S = 6. Pour différentes configurations du canal, les simulations ont montré un gain de 1/4 à 3/4 de décibel sur le rapport Eb/$N_0$ (Eb étant l'énergie par bit) pour un taux d'erreur binaire (BER) égal à $10^{-2}$ avant décodage correcteur d'erreurs. Au prix d'une augmentation modérée de la complexité du récepteur, ce gain est très appréciable pour augmenter la portée radio du système.

**Revendications**

1. Dispositif d'estimation de paramètres représentant un canal de propagation radio, comprenant un filtre adapté (5) pour produire des observations d'un vecteur de référence ($\underline{r}$) de W échantillons successifs d'un signal formé par filtrage adapté d'un signal (Y) reçu selon le canal de propagation avec un code d'étalement pilote (Cr), et des moyens (8) d'estimation de paramètres représentant le canal de propagation, incluant des vecteurs propres ($\underline{v}_k$) d'une matrice d'autocorrélation du vecteur de référence.

2. Dispositif selon la revendication 1, dans lequel les paramètres représentant le canal de propagation, estimés par les moyens d'estimation de paramètres (8), incluent en outre des valeurs propres ($\lambda_k$) de la matrice d'autocorrélation du vecteur de référence ($\underline{r}$), respectivement associées auxdits vecteurs propres ($\underline{v}_k$).

3. Dispositif selon la revendication 1 ou 2, dans lequel les moyens d'estimation de paramètres (8) comprennent :

   - des moyens (80-83) d'extraction de M sous-vecteurs de référence ($\underline{r}^i$) composés chacun de S échantillons successifs dudit signal formé par filtrage adapté, M et S étant des nombres plus grands que 1, les M sous-vecteurs de référence correspondant en moyenne à M plages énergétiques du vecteur de référence ($\underline{r}$) ;
   - des moyens (83) d'estimation des matrices d'autocorrélation respectives ($\underline{R}^i$) des M sous-vecteurs de référence ;
   - des moyens (84-85) de détermination de sous-vecteurs propres ($\underline{v}_j^i$) associés chacun à une valeur propre ($\lambda_j^i$) et à l'un des M sous-vecteurs de référence ($\underline{r}^i$), chaque sous-vecteur propre étant, pour la valeur propre associée, un vecteur propre de la matrice d'autocorrélation estimée du sous-vecteur de référence associé ;
   - des moyens (85) de formation de chaque vecteur propre estimé ($\underline{v}_k$) de la matrice d'autocorrélation du vecteur de référence en plaçant un des sous-vecteurs propres ($\underline{v}_j^i$) aux positions des S échantillons du sous-vecteur de référence associé et des échantillons nuls aux W-S autres positions.

4. Dispositif selon la revendication 3, dans lequel les moyens de détermination des sous-vecteurs propres (85) choisissent lesdits sous-vecteurs propres ($\underline{v}_j^i$), parmi l'ensemble des vecteurs propres des matrices d'autocorrélation ($\underline{R}^i$) des M sous-vecteurs de référence ($\underline{r}^i$), comme étant ceux qui sont respectivement associés aux valeurs propres ($\lambda_j^i$) de plus grands modules.

5. Dispositif selon la revendication 4, dans lequel les moyens de détermination des sous-vecteurs propres (85) déterminent un nombre donné (d) de sous-vecteurs propres ($\underline{v}_j^i$), associés aux d valeurs propres ($\lambda_j^i$) de plus grands modules.

6. Dispositif selon l'une quelconque des revendications 1 à 5, dans lequel ledit signal reçu selon le canal de propagation est composé de plusieurs signaux captés au moyen d'antennes différentes.

7. Démodulateur pour une réception selon un canal de propagation radio sur lequel sont définis plusieurs canaux logiques multiplexés incluant un canal pilote et au moins un canal de données, comprenant des moyens (5) d'obtention de plusieurs observations d'un premier vecteur ($\underline{r}$) de W échantillons successifs d'un premier signal formé par filtrage adapté d'un signal (Y) reçu selon le canal de propagation au moyen d'un premier code d'étalement (Cr) relatif au canal pilote, des moyens (6) d'obtention d'un second vecteur ($\underline{x}$) de W échantillons successifs d'un second signal formé par filtrage adapté dudit signal reçu au moyen d'un second code d'étalement (Cx) relatif au canal de données, des moyens (8) d'estimation de paramètres représentant le canal de propagation, incluant des vecteurs propres ($\underline{v}_k$) d'une matrice d'autocorrélation du premier vecteur, et des moyens (9) d'estimation de symboles pour estimer au moins un symbole d'information porté par le second signal sur la base des premier et second vecteurs et desdits paramètres représentant le canal de propagation.

8. Démodulateur selon la revendication 7, dans lequel les moyens d'estimation de paramètres (8) comprennent :

   - des moyens (80-83) d'extraction de M sous-vecteurs de référence ($\underline{r}^i$) composés chacun de S échantillons successifs du premier signal, M et S étant des nombres plus grands que 1, les M sous-vecteurs de référence correspondant en moyenne à M plages énergétiques du premier vecteur ($\underline{r}$) ;
   - des moyens (83) d'estimation des matrices d'autocorrélation respectives ($\underline{R}^i$) des M sous-vecteurs de référence ;
   - des moyens (84-85) de détermination de sous-vecteurs propres ($\underline{v}_j^i$) associés chacun à une valeur propre ($\lambda_j^i$) et à l'un des M sous-vecteurs de référence ($\underline{r}^i$), chaque sous-vecteur propre étant, pour la valeur propre associée, un vecteur propre de la matrice d'autocorrélation estimée du sous-vecteur de référence associé ;

- des moyens de formation de chaque vecteur propre estimé ($\underline{v}_k$) de la matrice d'autocorrélation du premier vecteur en plaçant un des sous-vecteurs propres ($\underline{v}_j^i$) aux positions des S échantillons du sous-vecteur de référence associé et des échantillons nuls aux W-S autres positions.

**9.** Démodulateur selon la revendication 8, dans lequel les moyens de détermination des sous-vecteurs propres (85) choisissent lesdits sous-vecteurs propres ($\underline{v}_j^i$), parmi l'ensemble des vecteurs propres des matrices d'autocorrélation ($\underline{R}^i$) des M sous-vecteurs de référence ($\underline{r}^i$), comme étant ceux qui sont respectivement associés aux valeurs propres ($\lambda_j^i$) de plus grands modules.

**10.** Démodulateur selon la revendication 9, dans lequel les moyens (85) de détermination des sous-vecteurs propres déterminent un nombre donné (d) de sous-vecteurs propres ($\underline{v}_j^i$), associés aux d valeurs propres ($\lambda_j^i$) de plus grands modules.

**11.** Démodulateur selon l'une quelconque des revendications 7 à 10, dans lequel les paramètres représentant le canal de propagation, estimés par les moyens d'estimation de paramètres (8), incluent en outre des valeurs propres ($\lambda_k$) de la matrice d'autocorrélation normalisée du premier vecteur, respectivement associées auxdits vecteurs propres ($\underline{v}_k$).

**12.** Démodulateur selon la revendication 11, dans lequel le second signal porte des symboles d'information binaires (b) modulés selon une modulation binaire à déplacement de phase, et dans lequel les moyens d'estimation de symboles (9) sont agencés pour estimer au moins un symbole d'information binaire porté par le second signal par le signe (b) de la partie réelle du nombre complexe

$$\sum_{k=0}^{d-1} \frac{(\lambda_k - N_0)/\|\underline{v}_k\|^2}{(1+\beta).\lambda_k - \beta.N_0} \left(\underline{r}^H \underline{v}_k\right)\left(\underline{v}_k^H \underline{x}\right),$$

où d est le nombre de vecteurs propres estimés de la matrice d'autocorrélation du premier vecteur, $\underline{v}_k$ est un vecteur propre de la matrice d'autocorrélation normalisée du premier vecteur, associé à une valeur propre $\lambda_k$, $N_0$ est une estimation de la puissance du bruit sur le canal de propagation, $\underline{r}$ et $\underline{x}$ sont respectivement les premier et second vecteurs, $\beta$ est un coefficient prédéterminé, $(.)^H$ désigne le transposé conjugué, et $\|.\|$ la norme d'un vecteur.

**13.** Démodulateur selon la revendication 12, comprenant des moyens de détermination d'une vraisemblance (A) dudit symbole d'information binaire estimé (b), proportionnellement à la valeur absolue de la partie réelle dudit nombre complexe.

**14.** Démodulateur selon la revendication 11, dans lequel le second signal porte des symboles d'information quaternaires (b) modulés selon une modulation quaternaire à déplacement de phase, et dans lequel les moyens d'estimation de symboles (9) sont agencés pour estimer au moins un symbole d'information quaternaire porté par le second signal par deux bits ($b_1$, $b_2$) respectivement définis par les signes des parties réelle et imaginaire du nombre complexe

$$\sum_{k=0}^{d-1} \frac{(\lambda_k - N_0)/\|\underline{v}_k\|^2}{(1+\beta).\lambda_k - \beta.N_0} \left(\underline{r}^H \underline{v}_k\right)\left(\underline{v}_k^H \underline{x}\right),$$

où d est le nombre de vecteurs propres estimés de la matrice d'autocorrélation du premier vecteur, $\underline{v}_k$ est un vecteur propre de la matrice d'autocorrélation normalisée du premier vecteur, associé à une valeur propre $\lambda_k$, $N_0$ est une estimation de la puissance du bruit sur le canal de propagation, $\underline{r}$ et $\underline{x}$ sont respectivement les premier et second vecteurs, $\beta$ est un coefficient prédéterminé, $(.)^H$ désigne le transposé conjugué, et $\|.\|$ la norme d'un vecteur.

**15.** Démodulateur selon la revendication 14, comprenant des moyens de détermination de vraisemblances respectives ($\Lambda_1$, $\Lambda_2$) desdits bits ($b_1$, $b_2$), proportionnellement aux valeurs absolues des parties réelle et imaginaire dudit nombre complexe.

16. Démodulateur selon l'une quelconque des revendications 7 à 15, dans lequel ledit signal reçu selon le canal de propagation est composé de plusieurs signaux captés au moyen d'antennes différentes.

**Claims**

1. A device for estimating parameters representing a radio propagation channel, comprising a matched filter (5) for producing observations of a reference vector ($\underline{r}$) of W successive samples of a signal formed by matched filtering a signal (Y) received along the propagation channel with a pilot spreading code (Cr), and means (8) for estimating parameters representing the propagation channel, including eigenvectors ($\underline{v}_k$) of an autocorrelation matrix of the reference vector.

2. The device as claimed in claim 1, wherein the parameters representing the propagation channel, estimated by the parameter estimation means (8), further include eigenvalues ($\lambda_k$) of the autocorrelation matrix of the reference vector ($\underline{r}$), respectively associated with said eigenvectors ($\underline{v}_k$).

3. The device as claimed in claim 1 or 2, wherein the parameter estimation means (8) comprise:

   - means (80-83) for extracting M reference subvectors ($\underline{r}^i$) each composed of S successive samples of said signal formed by matched filtering, M and S being numbers greater than 1, whereby the M reference subvectors correspond on average to M energy ranges of the reference vector ($\underline{r}$);
   - means (83) for estimating the respective autocorrelation matrices ($\underline{R}^i$) of the M reference subvectors;
   - means (84-85) for determining eigensubvectors ($\underline{v}_j^i$) each associated with an eigenvalue ($\lambda_j^i$) and with one of the M reference subvectors ($\underline{r}^i$), whereby each eigensubvector is, for the associated eigenvalue, an eigenvector of the estimated autocorrelation matrix of the associated reference subvector;
   - means (85) for forming each estimated eigenvector ($\underline{v}_k$) of the autocorrelation matrix of the reference vector by placing one of the eigensubvectors ($\underline{v}_j^i$) at the positions of the S samples of the associated reference subvector and zero samples at the W-S other positions.

4. The device as claimed in claim 3, wherein the means for determining the eigensubvectors (85) choose said eigensubvectors ($\underline{v}_j^i$) from the set of eigenvectors of the autocorrelation matrices ($\underline{R}^i$) of the M reference subvectors ($\underline{r}^i$), as being those which are respectively associated with the eigenvalues ($\lambda_j^i$) of largest moduli.

5. The device as claimed in claim 4, wherein the means for determining the eigensubvectors (85) determine a given number (d) of eigensubvectors ($\underline{v}_j^i$), associated with the d eigenvalues ($\lambda_j^i$) of largest moduli.

6. The device as claimed in any one of claims 1 to 5, wherein said signal received along the propagation channel is composed of a plurality of signals picked up by means of different antennas.

7. A demodulator for reception along a radio propagation channel on which are defined a plurality of multiplexed logical channels including a pilot channel and at least one data channel, comprising means (5) for obtaining a plurality of observations of a first vector ($\underline{r}$) of W successive samples of a first signal formed by matched filtering a signal (Y) received along the propagation channel by means of a first spreading code (Cr) relating to the pilot channel, means (6) for obtaining a second vector ($\underline{x}$) of W successive samples of a second signal formed by matched filtering said signal received by means of a second spreading code (Cx) relating to the data channel, means (8) for estimating parameters representing the propagation channel, including eigenvectors ($\underline{v}_k$) of an autocorrelation matrix of the first vector, and symbol estimation means (9) to estimate at least one information symbol carried by the second signal on the basis of the first and second vectors and of said parameters representing the propagation channel.

8. The demodulator as claimed in claim 7, wherein the parameter estimation means (8) comprise:

   - means (80-83) for extracting M reference subvectors ($\underline{r}^i$) each composed of S successive samples of the first signal, M and S being numbers greater than 1, whereby the M reference subvectors correspond on average to M energy ranges of the first vector ($\underline{r}$);
   - means (83) for estimating the respective autocorrelation matrices ($\underline{\hat{R}}^i$) of the M reference subvectors;

- means (84-85) for determining eigensubvectors ($\underline{v}_j^i$) each associated with an eigenvalue ($\lambda_j^i$) and with one of the M reference subvectors ($\underline{r}^i$), whereby each eigensubvector is, for the associated eigenvalue, an eigenvector of the estimated autocorrelation matrix of the associated reference subvector;

- means for forming each estimated eigenvector ($\underline{v}_k$) of the autocorrelation matrix of the first vector by placing one of the eigensubvectors ($\underline{v}_j^i$) at the positions of the S samples of the associated reference subvector and zero samples at the W-S other positions.

9. The demodulator as claimed in claim 8, wherein the means for determining the eigensubvectors (85) choose said eigensubvectors ($\underline{v}_j^i$) from the set of eigenvectors of the autocorrelation matrices ($\underline{R}^i$) of the M reference subvectors ($\underline{r}^i$), as being those which are respectively associated with the eigenvalues ($\lambda_j^i$) of largest moduli.

10. The demodulator as claimed in claim 9, wherein the means (85) for determining the eigensubvectors determine a given number (d) of eigensubvectors ($\underline{v}_j^i$), associated with the d eigenvalues ($\lambda_j^i$) of largest moduli.

11. The demodulator as claimed in any one of claims 7 to 10, wherein the parameters representing the propagation channel, estimated by the parameter estimation means (8), further include eigenvalues ($\lambda_k$) of the normalized autocorrelation matrix of the first vector, respectively associated with said eigenvectors ($\underline{v}_k$).

12. The demodulator as claimed in claim 11, wherein the second signal carries binary information symbols (b) modulated by binary phase shift keying, and wherein the symbol estimation means (9) are arranged to estimate at least one binary information symbol carried by the second signal by the sign (b) of the real part of the complex number

$$\sum_{k=0}^{d-1} \frac{(\lambda_k - N_0)/\|\underline{v}_k\|^2}{(1+\beta)\lambda_k - \beta . N_0} \left(\underline{r}^H \underline{v}_k\right)\left(\underline{v}_k^H \underline{x}\right),$$

where d is the number of estimated eigenvectors of the autocorrelation matrix of the first vector, $\underline{v}_k$ is an eigenvector of the normalized autocorrelation matrix of the first vector, associated with an eigenvalue $\lambda_k$, $N_0$ is an estimate of the noise power on the propagation channel, $\underline{r}$ and $\underline{x}$ are respectively the first and second vectors, $\beta$ is a predetermined coefficient, $(.)^H$ designates the conjugate transpose, and $\| . \|$ the norm of a vector.

13. The demodulator as claimed in claim 12, comprising means for determining a likelihood ($\lambda$) of said estimated binary information symbol (b), proportionally to the absolute value of the real part of said complex number.

14. The demodulator as claimed in claim 11, wherein the second signal carries quaternary information symbols (b) modulated by quarternary phase keying, and wherein the symbol estimation means (9) are arranged to estimate at least one quaternary information symbol carried by the second signal by two bits ($b_1$, $b_2$) respectively defined by the signs of the real and imaginary parts of the complex number

$$\sum_{k=0}^{d-1} \frac{(\lambda_k - N_0)/\|\underline{v}_k\|^2}{(1+\beta)\lambda_k - \beta . N_0} \left(\underline{r}^H \underline{v}_k\right)\left(\underline{v}_k^H \underline{x}\right),$$

where d is the number of estimated eigenvectors of the autocorrelation matrix of the first vector, $\underline{v}_k$ is an eigenvector of the normalized autocorrelation matrix of the first vector, associated with an eigenvalue $\lambda_k$, No is an estimate of the noise power on the propagation channel, $\underline{r}$ and $\underline{x}$ are respectively the first and second vectors, $\beta$ is a predetermined coefficient, $(.)^H$ designates the conjugate transpose, and $\| . \|$ the norm of a vector.

15. The demodulator as claimed in claim 14, comprising means for determining respective likelihoods ($\lambda_1$, $\lambda_2$) of said bits ($b_1$, $b_2$), proportionally to the absolute values of the real and imaginary parts of said complex number.

16. The demodulator as claimed in any one of claims 7 to 15, wherein said signal received along the propagation channel is composed of a plurality of signals picked up by means of different antennas.

**EP 1 240 759 B1**

**Patentansprüche**

1. Vorrichtung zum Bewerten von Parametern, die einen Funk-Ausbreitungskanal repräsentieren, umfassend ein signalangepasstes Filter (5) zum Produzieren von Beobachtungen eines Referenzvektors ($\underline{r}$) von W aufeinander folgenden Mustern eines Signals, das durch signalangepasste Filterung eines über den Ausbreitungskanal empfangenen Signals (Y) mit einem Pilot-Ausbreitungscode (Cr) gebildet wird, und Mittel (8) zum Bewerten von den Ausbreitungskanal repräsentierenden Parametern, welche Eigenvektoren ($\underline{v}_k$) einer Autokorrelationsmatrix des Referenzvektors einschließen.

2. Vorrichtung nach Anspruch 1, in der die von den Mitteln (8) zum Bewerten von Parametem bewerteten, den Ausbreitungskanal repräsentierenden Parameter außerdem Eigenwerte ($\lambda_k$) der Autokorrelationsmatrix des Referenzvektors ($\underline{r}$) einschließen, die besagten Eigenvektoren ($\underline{v}_k$) jeweils zugeordnet sind.

3. Vorrichtung nach Anspruch 1 oder 2, in der die Mittel (8) zum Bewerten von Parametem umfassen:

   - Mittel (80-83) zum Extrahieren von M Referenz-Untervektoren ($\underline{r}^i$), deren jeder aus S aufeinander folgenden Mustern des besagten, durch signalangepasste Filterung gebildeten Signals zusammengesetzt ist, wobei M und S Zahlen größer als 1 sind, und wobei die M Referenz-Untervektoren im Durchschnitt M energetischen Bereichen des Referenzvektors ($\underline{r}$) entsprechen;
   - Mittel (83) zum Bewerten der jeweiligen Autokorrelationsmatrizen ($\underline{\hat{R}}^i$) der M Referenz-Untervektoren;
   - Mittel (84-85) zum Bestimmen von Eigen-Untervektoren ($\underline{v}_j^i$), deren jeder einem Eigenwert ($\lambda_j^i$) und einem der M Referenz-Untervektoren ($\underline{r}^i$) zugeordnet ist, wobei jeder Eigen-Untervektor für den zugeordneten Eigenwert ein Eigenvektor der bewerteten Autokorrelationsmatrix des zugeordneten Referenz-Untervektors ist;
   - Mittel (85) zum Bilden jedes bewerteten Eigenvektors ($\underline{v}_k$) der Autokorrelationsmatrix des Referenzvektors, wobei einer der Eigen-Untervektoren ($\underline{v}_j^i$) an die Stellen der S Muster des zugeordneten Referenz-Untervektors und Nullwert-Muster an die W - S anderen Positionen gesetzt werden.

4. Vorrichtung nach Anspruch 3, in der die Mittel (85) zum Bestimmen der Eigen-Untervektoren die besagten Eigen-Untervektoren ($\underline{v}_j^i$) aus der Gesamtheit der Eigenvektoren der Autokorrelationsmatrizen ($\underline{R}^i$) der M Referenz-Untervektoren ($\underline{r}^i$) als diejenigen auswählen, welche jeweils den Eigenwerten ($\lambda_j^i$) von größeren Modulen zugeordnet sind.

5. Vorrichtung nach Anspruch 4, in der die Mittel (85) zum Bestimmen der Eigen-Untervektoren eine gegebene Anzahl (d) von Eigen-Untervektoren ($\underline{v}_j^i$) bestimmen, welche den d Eigenwerten ($\lambda_j^i$) von größeren Modulen zugeordnet sind.

6. Vorrichtung nach einem der Ansprüche 1 bis 5, in der das besagte, auf dem Ausbreitungskanal empfangene Signal aus mehreren, mithilfe unterschiedlicher Antennen empfangenen Signalen zusammengesetzt ist.

7. Demodulator für einen Empfang über einen Funk-Ausbreitungskanal, auf dem mehrere multiplexierte logische Kanäle definiert sind, einschließlich eines Pilotkanals und mindestens eines Datenkanals, umfassend Mittel (5) zum Erhalten mehrerer Beobachtungen eines ersten Vektors ($\underline{r}$) aus W aufeinander folgenden Mustern eines ersten Signals, das durch signalangepasste Filterung eines Signals (Y) erhalten wird, welches über den Ausbreitungskanal mittels eines ersten, auf den Pilotkanal bezogenen Ausbreitungscodes (Cr) empfangen wird, Mittel (6) zum Erhalten eines zweiten Vektors ($\underline{x}$) aus W aufeinander folgenden Mustern eines zweiten Signals, das durch signalangepasste Filterung des besagten empfangenen Signals mittels eines zweiten, auf den Datenkanal bezogenen Ausbreitungscodes (Cx) erhalten wird, Mittel (8) zum Bewerten von den Ausbreitungskanal repräsentierenden Parametern, einschließlich Eigenvektoren ($\underline{v}_k$) einer Autokorrelationsmatrix des ersten Vektors, und Mittel (9) zum Bewerten von Symbolen, um mindestens ein Informationssymbol zu bewerten, das von dem zweiten Signal auf der Basis der ersten und zweiten Vektoren und der besagten, den Ausbreitungskanal repräsentierenden Parameter übertragen wird.

8. Demodulator nach Anspruch 7, in dem die Mittel (8) zum Bewerten von Parametern umfassen:

   - Mittel (80-83) zum Extrahieren von M Referenz-Untervektoren ($\underline{r}^i$), deren jeder aus S aufeinander folgenden Mustern des ersten Signals zusammengesetzt ist, wobei M und S Zahlen größer als 1 sind, und wobei die M Referenz-Untervektoren im Durchschnitt M energetischen Bereichen des ersten Vektors ($\underline{r}$) entsprechen;
   - Mittel (83) zum Bewerten der jeweiligen Autokorrelationsmatrizen ($\underline{R}^i$) der M Referenz-Untervektoren;

- Mittel (84-85) zum Bestimmen von Eigen-Untervektoren ($\underline{v}_j^i$), deren jeder einem Eigenwert ($\lambda_j^i$) und einem der M Referenz-Untervektoren ($\underline{r}^i$) zugeordnet ist, wobei jeder Eigen-Untervektor für den zugeordneten Eigenwert ein Eigenvektor der bewerteten Autokorrelationsmatrix des zugeordneten Referenz-Untervektors ist;

- Mittel zum Bilden jedes bewerteten Eigenvektors ($\underline{v}_k$) der Autokorrelationsmatrix des ersten Vektors, wobei einer der Eigen-Untervektoren ($\underline{v}_j^i$) an die Stellen der S Muster des zugeordneten Referenz-Untervektors und Nullwert-Muster an die W - S anderen Positionen gesetzt werden.

9. Demodulator nach Anspruch 8, in dem die Mittel (85) zum Bestimmen der Eigen-Untervektoren besagte Eigen-Untervektoren ($\underline{v}_j^i$) aus der Gesamtheit der Eigenvektoren der Autokorrelationsmatrizen ($\underline{R}^i$) der M Referenz-Untervektoren ($\underline{r}^i$) als diejenigen auswählen, welche jeweils den Eigenwerten ($\lambda_j^i$) von größeren Modulen zugeordnet sind.

10. Demodulator nach Anspruch 9, in dem die Mittel (85) zum Bestimmen der Eigen-Untervektoren eine gegebene Anzahl (d) von Eigen-Untervektoren ($\underline{v}_j^i$) bestimmen, welche den d Eigenwerten ($\lambda_j^i$) von größeren Modulen zugeordnet sind.

11. Demodulator nach einem der Ansprüche 7 bis 10, in dem die den Ausbreitungskanal repräsentierenden, durch die Mittel (8) zum Bewerten von Parametern bewerteten Parameter außerdem Eigenwerte ($\lambda_k$) der normierten Autokorrelationsmatrix des ersten Vektors einschließen, die jeweils den besagten Eigenvektoren ($\underline{v}_k$) zugeordnet sind.

12. Demodulator nach Anspruch 11, in dem das zweite Signal binäre Informationssymbole (b) trägt, die nach einer binären Phasenverschiebungs-Modulation moduliert sind, und in dem die Mittel (9) zum Bewerten von Symbolen dazu eingerichtet sind, mindestens ein durch das zweite Signal übertragenes binäres Informationssymbol durch das Vorzeichen ($\hat{b}$) des reellen Teils der komplexen Zahl

$$\sum_{k=0}^{d-1} \frac{(\lambda_k - N_0)/\|\underline{v}_k\|^2}{(1+\beta)\lambda_k - \beta N_0} \left(\underline{r}^H \underline{v}_k\right)\left(\underline{v}_k^H \underline{x}\right)$$

zu bewerten, wo d die Anzahl von bewerteten Eigenvektoren der Autokorrelationsmatrix des ersten Vektors ist, $\underline{v}_k$ ein einem Eigenwert $\lambda_k$ zugeordneter Eigenvektor der normierten Autokorrelationsmatrix des ersten Vektors ist, $N_0$ eine Bewertung der Rauschleistung auf dem Ausbreitungskanal ist, $\underline{r}$ und $\underline{x}$ jeweils die ersten und zweiten Vektoren sind, $\beta$ ein vorbestimmter Koeffizient ist, $(.)^H$ die transponierte Konjugierte bedeutet, und $\|.\|$ die Norm eines Vektors.

13. Demodulator nach Anspruch 12, umfassend Mittel zum Bestimmen einer Wahrscheinlichkeit (A) des besagten bewerteten binären Informationssymbols ($\hat{b}$), proportional zum Absolutwert des reellen Teils der besagten komplexen Zahl.

14. Demodulator nach Anspruch 11, in dem das zweite Signal quaternäre Informationssymbole (b) überträgt, die nach einer quaternären Phasenverschiebungs-Modulation moduliert sind, und in dem die Mittel (9) zum Bewerten von Symbolen dazu eingerichtet sind, mindestens ein quaternäres, durch das zweite Signal in zwei, jeweils durch die Vorzeichen des reellen und des imaginären Anteils der komplexen Zahl

$$\sum_{k=0}^{d-1} \frac{(\lambda_k - N_0)/\|\underline{v}_k\|^2}{(1+\beta)\lambda_k - \beta N_0} \left(\underline{r}^H \underline{v}_k\right)\left(\underline{v}_k^H \underline{x}\right)$$

definierten Bits ($\hat{b}_1, \hat{b}_2$) übertragenen Informationssymbol zu bewerten, wo d die Anzahl von bewerteten Eigenvektoren der Autokorrelationsmatrix des ersten Vektors ist, $\underline{v}_k$ ein einem Eigenwert $\lambda_k$ zugeordneter Eigenvektor der normierten Autokorrelationsmatrix des ersten Vektors ist, $N_0$ eine Bewertung der Rauschleistung auf dem Ausbreitungskanal ist, $\underline{r}$ und $\underline{x}$ jeweils die ersten und zweiten Vektoren sind, $\beta$ ein vorbestimmter Koeffizient ist, $(.)^H$ die transponierte Konjugierte bedeutet, und $\|.\|$ die Norm eines Vektors.

15. Demodulator nach Anspruch 14, umfassend Mittel zum Bestimmen von jeweiligen Wahrscheinlichkeiten ($\Lambda_1$, $\Lambda_2$) der besagten Bits ($b_1$, $b_2$), proportional zu den Absolutwerten der reellen und imaginären Anteile der besagten komplexen Zahl.

16. Demodulator nach einem der Ansprüche 7 bis 15, in dem das besagte, auf dem Ausbreitungskanal empfangene Signal aus mehreren, mithilfe unterschiedlicher Antennen empfangenen Signalen zusammengesetzt ist.

FIG.1.

FIG.2.

EP 1 240 759 B1

FIG.3.

FIG.4.